# EUROPÄISCHE PATENTSCHRIFT

(11) **EP 1 482 701 B1**
(45) Veröffentlichungstag und Bekanntmachung des Hinweises auf die Patenterteilung: **14.09.2005**
(21) Anmeldenummer: 03090159.9
(22) Anmeldetag: 27.05.2003
(51) Int. Cl.: H04L 29/06

(54) **Verfahren zum paketorientierten Übertragen von Daten in Telekommunikationsnetzen mittels Umsetzung in einem Zwischenknoten von einem verbindungslosen zu einem verbindungsorientierten Übertragungsprotokoll und umgekehrt**
Method for transmitting packet-oriented data in a telecommunication network by converting in a proxy a connectionless transport protocol into a connection-oriented transport protocol and vice versa
Procédé pour la transmission des données par paquets dans un réseau de télécommunication par la conversion dans un noeud mandataire d'un protocole de transport sans connection dans un protocole de transport orienté connection et vice-versa

(43) Veröffentlichungstag der Anmeldung: 01.12.2004
(73) Patentinhaber: SIEMENS AKTIENGESELLSCHAFT, 80333 München (DE)
(72) Erfinder: Chudoba, Christian, 10405 Berlin (DE)

(56) Entgegenhaltungen:
- WO-A-02/11389
- WO-A-03/001745
- US-A1- 2002 101 848
- US-A1- 2002 186 683
- US-A1- 2003 097 592
- US-B1- 6 397 259

## Beschreibung

Die Erfindung betrifft ein Verfahren zum paketorientierten Übertragen von Daten in Telekommunikationsnetzen zwischen einem Kommunikationsendgerät und einem Datenrechner, einen Netz-Zwischenknoten und ein Telekommunikationsnetz.

Zum paketorientierten Übertragen von Daten in Telekommunikationsnetzen zwischen Kommunikationsendgeräten und Datenrechnern ist es allgemein bekannt, ein verbindungsorientiertes Übertragungsprotokoll (z. B. das Protokoll TCP = Transport Control Protocol) einzusetzen. Das verbindungsorientierte Übertragungsprotokoll stellt dabei eine Verbindung zwischen dem Kommunikationsendgerät und dem Datenrechner her, bei der eine Vielzahl von Kontrollmaßnahmen durchgeführt werden. So wird beispielsweise bei Verwendung des Transport Control Protocols überprüft, ob sämtliche von dem jeweiligen Datensender abgesandten Datenpakete beim jeweiligen Datenempfänger eintreffen und ob die Reihenfolge der übertragenen Datenpakete beim Empfänger der Reihenfolge entspricht, mit der diese Pakete beim Sender abgesendet wurden. Zu diesem Zweck werden eine Vielzahl von Bestätigungsnachrichten ("acknowledgements") bei der Datenübertragung zwischen dem Kommunikationsendgerät und dem Datenrechner ausgetauscht. Insbesondere in Netzwerken mit langen Schleifenlaufzeiten (Antwortzeiten) führt das Warten auf derartige Bestätigungsnachrichten zu einer Verringerung der Datenübertragungsrate, obwohl ggf. eine hohe physikalisch verfügbare Brandbreite vorhanden ist. Beim Verbindungsaufbau und Verbindungsabbau der Datenübertragung werden ebenfalls mehrfach Verständigungsnachrichten zwischen dem Kommunikationsendgerät und dem Datenrechner hin- und hergesendet. Beispielsweise wird bei Verwendung des Transport Control Protocols beim Verbindungsaufbau ein sog. Dreifachhandschlag (handshaking) und beim Verbindungsabbau ein sog. Vierfachhandschlag durchgeführt. Durch diese Vielzahl von Sicherungs- und Kontrollmaßnahmen verzögert sich die Datenübertragung zwischen dem Kommunikationsendgerät und dem Datenrechner, so dass bei der paketorientierten Datenübertragung deutliche Wartezeiten auftreten können

Aus der Patentanmeldung US2002/0101848A1 ist ein drahtlos betriebener Client bekannt, von dem unter Nutzung des UDP-Protokolls eine Nachricht an ein WAP-Gateway übertragen wird. Das WAP-Gateway übersetzt das UDP-Protokolls in das TCP-Protokoll und sendet die Nachricht an einen Web-Server weiter. Der Web-Server sendet eine Antwortnachricht an das WAP-Gateway, dieses übersetzt das TCP-Protokoll in das UDP-Protokoll und sendet die Antwortnachricht an den Client weiter.

Aus der Patentanmeldung US2003/0097592A1 ist ein drahtlos betriebenes Gerät bekannt, welches unter Nutzung des UDP-Protokolls eine Nachricht an ein drahtlos betriebenes Netzwerk absendet. Ein WAP-Gateway konvertiert das UDP-Protokoll in das TCP-Protokoll und leitet die Nachricht an ein öffentliches Netzwerk weiter.

Aus der Patentschrift US6,397,259B1 ist ein drahtlos betriebener Client bekannt, der das UDP-Protokoll nutzt. Ein drahtlos betriebenes Netz empfängt mittels des UDP-Protokolls übertragene Nachrichtenpakete und sendet diese über eine TCP-Verbindung an einen Proxy-Server weiter.

Der vorliegenden Erfindung liegt die Aufgabe zugrunde, ein Verfahren, einen Netzknoten und ein Telekommunikationsnetz anzugeben, mit denen eine schnelle paketorientierte Datenübertragung realisiert werden kann bei Mobilfunk-Endgeräten, die mittels verbindungsorientierter Übertragungsprotokolle kommunizieren.

Diese Aufgabe wird bei einem Verfahren zum paketorientierten Übertragen von Daten in Telekommunikationsnetzen zwischen einem Kommunikationsendgerät und einem Datenrechner, wobei bei dem Verfahren
- die Datenübertragung über einen zwischengeschalteten protokollumsetzenden Zwischenknoten vorgenommen wird, der Nachrichten nach einem verbindungslosen Übertragungsprotokoll in Nachrichten nach einem verbindungsorientierten Übertragungsprotokoll und umgekehrt umsetzt, erfindungsgemäß dadurch gelöst, dass
- verfahrenseinleitend eine Start-Datenanforderungsnachricht von dem Kommunikationsendgerät mittels des verbindungsorientierten Übertragungsprotokolls abgesandt wird,
- diese Start-Datenanforderungsnachricht von dem Zwischenknoten empfangen wird,
- von dem Zwischenknoten erkannt wird, dass die Start-Datenanforderungsnachricht mittels des verbindungsorientierten Übertragungsprotokolls übertragen wurde,
- von dem Zwischenknoten mittels des verbindungsorientierten Übertragungsprotokolls ein Programmmodul zu dem Kommunikationsendgerät übermittelt wird, welches dem Kommunikationsendgerät ein Senden und Empfangen von Nachrichten mittels des verbindungslosen Übertragungsprotokolls ermöglicht, und wobei das Programmmodul nur dann zu dem Kommunikationsendgerät übermittelt wird, wenn durch den Zwischenknoten festgestellt wird, dass das Kommunikationsendgerät ein Mobilfunk-Endgerät ist, und
- daraufhin von dem Kommunikationsendgerät mittels des verbindungslosen Übertragungsprotokolls eine erste Datenanforderungsnachricht an den Datenrechner abgesendet wird.

Dabei wird hier unter einem verbindungsorientierten Übertragungsprotokoll ein solches Übertragungsprotokoll verstanden, welches durch eine umfangreiche Kontrolle der Datenübertragung zwischen einem Datensender und einem Datenempfänger eine fehlerfreie Übertragung von Datenpaketen sicherstellt. Dies ähnelt der Simulation einer festen Verbindung (beispielsweise eines Datenkabels) zwischen dem Datensender und dem Datenempfänger, daher wird ein solches Übertragungsprotokoll als "verbindungsorientiertes" Übertragungsprotokoll bezeichnet. In der Praxis jedoch besteht zwischen dem Datensender und dem Datenempfänger im allgemeinen keine feste Verbindung in Form eines Datenkabels, sondern die Datenpakete werden auf fallweise wechselnden Wegen über verschiedenste Vermittlungsstellen zwischen dem Datensender zum Datenempfänger übertragen.

Unter einem verbindungslosen Übertragungsprotokoll soll ein Übertragungsprotokoll verstanden werden, bei dessen Anwendung nicht kontrolliert wird, ob die vom Datensender abgesandten Datenpakete vollständig und/oder in der richtigen Reihenfolge beim Datenempfänger ankommen. Bei Verwendung eines derartigen verbindungslosen Übertragungsprotokolls wird also darauf verzichtet, die Übertragung jedes einzelnen Datenpaketes zu überprüfen.

Bei dem erfindungsgemäßen Verfahren wird vorteilhaft ein verbindungsloses Übertragungsprotokoll verwendet, und von dem protokollumsetzenden Zwischenknoten werden Nachrichten nach einem verbindungsorientierten Nachrichtenübertragungsprotokoll in das verbindungslose Übertragungsprotokoll umgesetzt und umgekehrt. Durch die Verwendung des verbindungslosen Übertragungsprotokolls kann die Datenübertragungsrate beträchtlich gesteigert werden, da auf die komplizierten und zeitaufwendigen Kontrollmechanismen zur Überprüfung der Übertragung der Datenpakete verzichtet wird. Dadurch lässt sich eine deutlich schnellere Datenübertragung realisieren. Weiterhin wird vorteilhafterweise das Kommunikationsendgerät automatisch zur Teilnahme an dem erfindungsgemäßen Verfahren ausgerüstet, indem ein Programmmodul zu dem Kommunikationsendgerät übermittelt wird. Auf diese Weise können vorteilhaft auch Kommunikationsendgeräte für das erfindungsgemäße Verfahren herangezogen werden, welche ursprünglich nur in der Lage waren, mittels verbindungsorientierter Übertragungsprotokolle zu kommunizieren.

Das erfindungsgemäße Verfahren kann so ausgestaltet sein, dass die erste Datenanforderungsnachricht von dem Zwischenknoten des Telekommunikationsnetzes empfangen wird, von dem Zwischenknoten diese Datenanforderungsnachricht mittels des verbindungsorientierten Übertragungsprotokolls zu dem Datenrechner übertragen wird, eine auf die Datenanforderungsnachricht hin von dem Datenrechner erstellte und mittels des verbindungsorientierten Übertragungsprotokolls an das Kommunikationsendgerät abgesandte Datennachricht von dem Zwischenknoten empfangen wird, und von dem Zwischenknoten diese Datennachricht mittels des verbindungslosen Übertragungsprotokolls zu dem Kommunikationsendgerät übertragen wird. Dadurch lässt sich das erfindungsgemäße Verfahren vorteilhaft auch bei Datenrechnern einsetzen, welche lediglich mittels eines verbindungsorientierten Übertragungsprotokolls ihre Daten übertragen können. Dadurch wird insbesondere die Datenübertragung zu Internet-Servern ermöglicht, welche oftmals mit dem verbindungsorientierten Übertragungsprotokoll TCP arbeiten.

Das Verfahren kann auch so ablaufen, dass das Programmmodul nur dann zu dem Kommunikationsendgerät übermittelt wird, wenn durch den Zwischenknoten festgestellt wird, dass das Programmmodul noch nicht auf dem Kommunikationsendgerät installiert ist. Dadurch wird vorteilhafterweise eine unnötige Übermittlung des Programmmoduls an das Kommunikationsendgerät vermieden, wenn dieses bereits mit dem Programmmodul ausgerüstet ist.

Bei dem erfindungsgemäßen Verfahren kann als verbindungsorientiertes Übertragungsprotokoll ein verbindungsorientiertes Übertragungsprotokoll der Transport-Schicht (Schicht 4) des ISO/OSI-Kommunikationsmodells verwendet werden.

In einer speziellen Ausgestaltung des erfindungsgemäßen Verfahrens kann als verbindungsorientiertes Übertragungsprotokoll das Transmission Control Protocol verwendet wird. Das Transmission Control Protocol wird vorteilhafterweise von einer Vielzahl von Kommunikationsendgeräten und Datenrechnern bei der Datenübertragung verwendet, beispielsweise bei Internet-Anwendungen.

Als verbindungsloses Übertragungsprotokoll kann bei dem erfindungsgemäßen Verfahren ein verbindungsloses Übertragungsprotokoll der Netzwerk-Schicht (Schicht 3) des ISO/OSI-Kommunikationsmodells verwendet werden.

In einer speziellen Form des erfindungsgemäßen Verfahrens kann als verbindungsloses Übertragungsprotokoll das User Datagram Protocol verwendet werden. Bei dem User Datagram Protocol handelt es sich vorteilhafterweise um ein standardisiertes Übertragungsprotokoll, so dass ein systemübergreifender Einsatz dieses Übertragungsprotokolls einfach und mit geringem Aufwand möglich ist.

Das erfindungsgemäße Verfahren kann so ausgestaltet sein, dass als Kommunikationsendgerät ein drahtlos betreibbares Kommunikationsendgerät und als Telekommunikationsnetz ein Mobilfunknetz verwendet wird.

Bezüglich des Anordnungsaspektes wird die obengenannte Aufgabe bei einem Zwischenknoten für ein Telekommunikationsnetz zur paketorientierten Übertragung von Daten zwischen einem Datenrechner und einem Kommunikationsendgerät, wobei der Zwischenknoten zum Empfangen von seitens des Kommunikationsendgerätes mittels eines verbindungslosen Übertragungsprotokolls übertragenen Nachrichten, zum Weitersenden dieser Nachrichten an den Datenrechner mittels eines verbindungsorientierten Übertragungsprotokolls, zum Empfangen von seitens des Datenrechners mittels des verbindungsorientierten Übertragungsprotokolls übertragenen Nachrichten und zum Weitersenden dieser Nachrichten an das Kommunikationsendgerät mittels des verbindungslosen Übertragungsprotokolls ausgestaltet ist, erfindungsgemäß gelöst durch eine Vergleichereinheit, die aus einem Adressenspeicher ausliest, über welchen Träger das Kommunikationsendgerät seine Daten zu dem Zwischenknoten überträgt und durch Übertragungsmittel, mit denen zu dem Kommunikationsendgerät ein Programmmodul übertragbar ist, welches ein Senden und Empfangen von Nachrichten mittels des verbindungslosen Übertragungsprotokolls ermöglicht.

Mittels eines solchen Zwischenknotens kann vorteilhafterweise eine Protokollumsetzung zwischen dem verbindungsorientierten Übertragungsprotokoll und dem verbindungslosen Übertragungsprotokoll und umgekehrt vorgenommen werden, so dass durch den Einsatz des verbindungslosen Übertragungsprotokolls die Geschwindigkeit der Datenübertragung beträchtlich erhöht werden kann. Mittels der Übertragungsmittel kann vorteilhafterweise das Kommunikationsendgerät automatisch zur Verwendung des verbindungslosen Übertragungsprotokolls ausgerüstet werden, indem ein entsprechendes Programmmodul zu dem Kommunikationsendgerät übertragen wird.

Der Zwischenknoten kann erfindungsgemäß so ausgestaltet sein, dass er Erkennungsmittel aufweist, mit denen erkennbar ist, ob eine eintreffende Nachricht mittels des verbindungslosen Übertragungsprotokolls oder mittels des verbindungsorientierten Übertragungsprotokolls übertragen wird. Dadurch kann vorteilhafterweise seitens des Zwischenknotens erkannt werden, welches Übertragungsprotokoll bei einer eintreffenden Nachricht verwendet wird. Im Anschluss an die Erkennung wird von dem Zwischenknoten entschieden, ob eine Datenumsetzung in ein anderes Übertragungsprotokoll notwendig ist oder nicht.

Der Zwischenknoten kann erfindungsgemäß auch so ausgestaltet sein, dass er Sendemittel aufweist, mit denen eine eintreffende Nachricht mittels des verbindungslosen Übertragungsprotokolls weitergesendet werden kann. Der Zwischenknoten kann auch so ausgestaltet sein, dass er Sendemittel aufweist, mit denen eine eintreffende Nachricht mittels des verbindungsorientierten Übertragungsprotokolls weitergesendet werden kann.

Der Zwischenknoten kann Feststellungsmittel aufweisen, mit denen feststellbar ist, ob auf dem Kommunikationsendgerät ein Programmmodul installiert ist, welches dem Kommunikationsendgerät ein Senden und Empfangen von Nachrichten mittels des verbindungslosen Übertragungsprotokolls ermöglicht. Mit Hilfe dieser Feststellungsmittel kann vorteilhafterweise erkannt werden, ob das Kommunikationsendgerät in der Lage ist, mittels des verbindungslosen Übertragungsprotokolls zu kommunizieren.

Ein Zwischenknoten der vorstehend beschriebenen Art kann erfindungsgemäß in einem Telekommunikationsnetz eingesetzt werden.

Dabei kann der Zwischenknoten nachrichtenbezogen zwischen einem Kommunikationsendgerät und einem mit dem Telekommunikationsnetz verbundenem Datenrechner angeordnet sein.

Im folgenden wird die Erfindung anhand von in den Figuren 1 bis 3 dargestellten Ausführungsbeispielen näher erläutert. Dabei ist in
Figur 1 eine Datenübertragung zwischen einem Kommunikationsendgerät und einem Datenrechner, in
Figur 2 ein beispielhafter Nachrichtenaustausch zwischen einem Kommunikationsendgerät, einem Zwischenknoten und einem Datenrechner und in
Figur 3 ein detaillierteres Ausführungsbeispiel eines Zwischenknotens dargestellt.

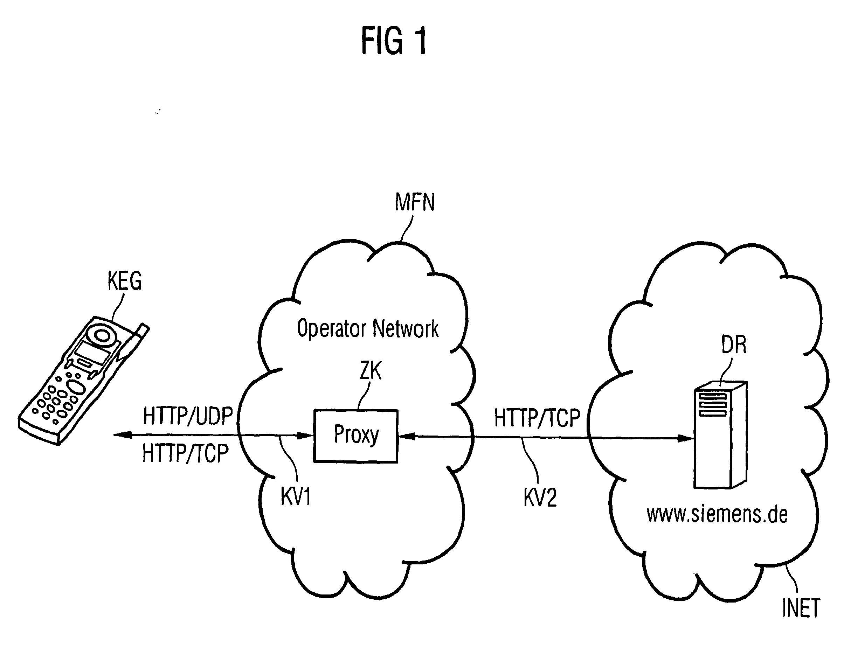

In Figur 1 ist ein Kommunikationsendgerät KEG dargestellt, welches mit einem Mobilfunknetz MFN verbunden ist. Bei dem Kommunikationsendgerät KEG kann es sich beispielsweise um ein Mobiltelefon, um einen mobilen Rechner mit Mobilfunkschnittstelle oder um einen Palmtop handeln. Das Mobilfunknetz MFN kann beispielsweise als ein Mobilfunknetz der zweiten oder dritten Generation, z. B. als ein Mobilfunknetz nach einem der Standards GSM, GPRS, UMTS oder CDMA ausgestaltet sein. Das Mobilfunknetz MFN enthält einen Zwischenknoten ZK, welcher in Form eines Proxy-Rechners ausgestaltet ist. Das Kommunikationsendgerät KEG ist über eine erste Kommunikationsverbindung KV1 mit dem Zwischenknoten ZK verbunden. Über diese erste Kommunikationsverbindung KV1 kann das Kommunikationsendgerät KEG auf Grundlage des Hypertext Transfer Protocols HTTP mittels eines verbindungslosen Übertragungsprotokolls UDP (UDP = User Datagram Protocol) kommunizieren. Das Protokoll UDP arbeitet verbindungslos und ohne Bestätigung der übertragenen Daten. Über diese erste Kommunikationsverbindung KV1 kann das Kommunikationsendgerät KEG aber auch mittels des verbindungsorientierten Übertragungsprotokolls TCP (TCP = Transport Control Protocol) Daten übertragen.

Der Zwischenknoten ZK ist über eine zweite Kommunikationsverbindung KV2 mit einem Datenrechner DR verbunden, wobei der Datenrechner Bestandteil eines weiteren Kommunikationsnetzes ist, in diesem Fall Bestandteil des Internets INET. Als Datenrechner DR kann beispielsweise ein Internet-Server dienen, auf dem eine Reihe von Internetseiten zum Abruf bereitgehalten werden. Der Zwischenknoten ZK kommuniziert mit dem Datenrechner DR über die zweite Kommunikationsverbindung KV2 mittels des verbindungsorientierten Übertragungsprotokolls TCP. Diese Kommunikation findet auf Grundlage des Hypertext Transfer Protocols HTTP statt. Der Datenrechner DR ist im Internet über die Internetadresse "www.siemens.de" adressierbar.

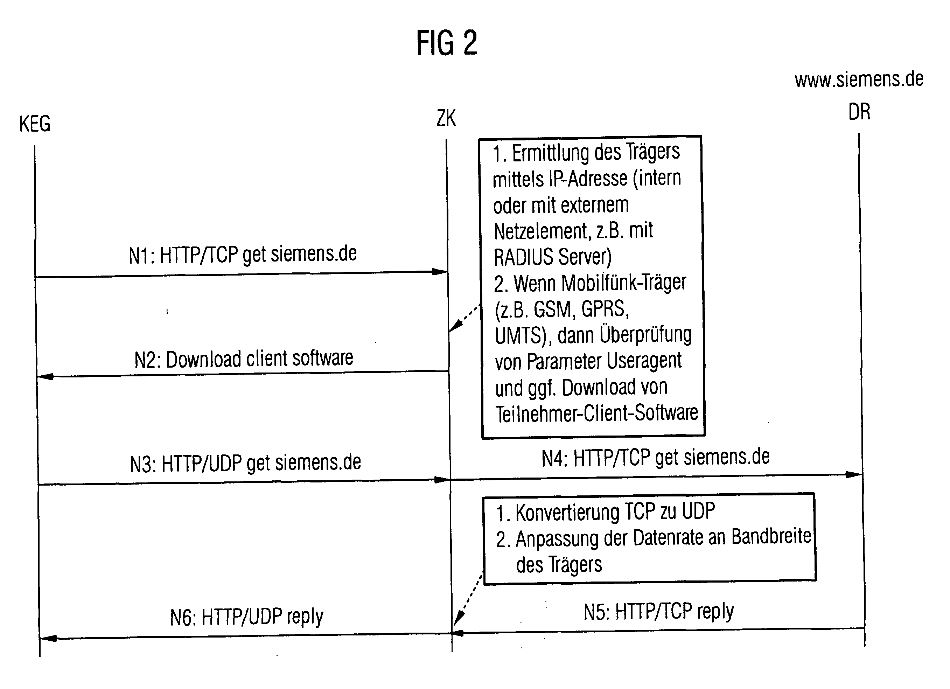

In Figur 2 ist in einer diagrammartigen Darstellung ein Beispiel eines Signalflusses zwischen dem Kommunikationsendgerät KEG, dem Zwischenknoten ZK und dem Dienstrechner DR dargestellt. Zum Beginn des Verfahrens sendet das Kommunikationsendgerät KEG eine Start-Datenanforderungsnachricht N1 "get siemens.de" mittels des verbindungsorientierten Übertragungsprotokolls TCP an den Dienstrechner DR ab. Diese Startanforderungsnachricht N1 gelangt zu einem nachrichtenflussbezogen zwischen dem Kommunikationsendgerät KEG und dem Datenrechner angeordneten Zwischenknoten ZK des Telekommunikationsnetzes und wird von diesem Zwischenknoten aufgehalten. Der Zwischenknoten erkennt anhand der Art der Kommunikationsverbindung KV1, dass die Start-Datenanforderungsnachricht N1 mittels verbindungsorientierten Übertragungsprotokolls TCP übertragen wurde. Weiterhin ermittelt der Zwischenknoten ZK, welcher Träger (Bearer) zur Übertragung der Start-Datenanforderungsnachricht N1 verwendet wurde. Die Bestimmung dieses Trägers kann beispielsweise erfolgen durch Auswertung der IP-Adresse des Kommunikationsendgerätes KEG, welche mit der Start-Datenanforderungsnachricht N1 zu dem Zwischenknoten übertragen wurde. Alternativ oder zusätzlich kann die Bestimmung des Trägers auch erfolgen unter Benutzung eines externen Netzelementes des Mobilfunknetzes, beispielsweise eines RADIUS-Servers, bei dem sich das Kommunikationsendgerät KEG in bekannter Weise beim Netzzugang authentisiert hat. Durch Abfrage eines RADIUS-Attributes von diesem RADIUS-Server kann der Zwischenknoten ebenfalls die Art des Bearers ermitteln. Als Ergebnis dieser Träger-Ermittlung liegt im Zwischenknoten ZK die Information vor, dass das Kommunikationsendgerät KEG beispielsweise einen der Träger UMTS, GPRS, GSM oder CDMA verwendet. In diesem speziellen Ausführungsbeispiel wird das erfindungsgemäße Verfahren im Normalfall nur durchgeführt, wenn es sich bei dem Kommunikationsendgerät KEG um ein mobiles Kommunikationsendgerät handelt, bei dem über eine Funkschnittstelle die Kommunikationsverbindung KV1 realisiert wird. Sollte es sich bei dem Kommunikationsendgerät KEG1 jedoch beispielsweise um ein Festnetztelefon handeln (Träger ISDN), dann kann fallweise entschieden werden, ob das Verfahren angewendet wird oder nicht.

Im Ausführungsbeispiel steht nun fest, dass das Kommunikationsendgerät KEG beispielsweise den Träger UMTS nutzt. In einem nächsten Schritt überprüft der Zwischenknoten ZK, ob das Kommunikationsendgerät KEG in der Lage ist, das verbindungslose Übertragungsprotokoll UDP für die Datenübertragung zu verwenden. Es wird dabei im besonderen überprüft, ob das Kommunikationsendgerät KEG mit einer Software ausgerüstet ist, welche dem Kommunikationsendgerät ein Senden und Empfangen von Nachrichten mittels des Übertragungsprotokolls UDP ermöglicht. Dazu wird aus der Start-Datenanforderungsnachricht N1 der HTTP-Parameter "User Agent" ausgelesen. In diesem Parameter sind die Arten von Übertragungsprotokollen codiert, die das Kommunikationsendgerät KEG zu seiner Datenübertragung verwenden kann. Stellt der Zwischenknoten bei Auswertung des Parameters "User Agent" fest, dass das Kommunikationsendgerät KEG nicht über die notwendige Software zum Senden und Empfangen von Nachrichten mittels des verbindungslosen Übertragungsprotokolls UDP verfügt, so wird die benötigte Software von dem Zwischenknoten ZK zu dem Kommunikationsendgerät KEG übertragen (Nachricht N2) und auf dem Kommunikationsendgerät KEG installiert. Daraufhin sendet das Kommunikationsendgerät KEG mittels einer Nachricht N3 eine erste Datenanforderungsnachricht N3 mittels des verbindungslosen Übertragungsprotokolls UDP an den Dienstrechner DR ab. Dies Nachricht N3 stimmt inhaltlich mit der Start-Anforderungsnachricht N1 überein. Es wird jedoch anstelle des verbindungsorientierten Übertragungsprotokolls TCP das verbindungslose Datenübertragungsprotokoll UDP verwendet. Die erste Datenanforderungsnachricht N3 erreicht den Zwischenknoten ZK und wird von diesem empfangen. Der Zwischenknoten ZK nimmt nun eine Protokollumsetzung des verbindungslosen Übertragungsprotokolls UDP in das verbindungsorientierte Übertragungsprotokoll TCP vor und sendet die Datenanforderungsnachricht mittels des verbindungsorientierten Übertragungsprotokolls TCP zu dem Datenrechner weiter (Nachricht N4). Der Datenrechner DR empfängt diese Datenanforderungsnachricht N4 und bearbeitet sie, d. h. der Datennehmer stellt in diesem Fall die gewünschte Internetseite "siemens.de" bereit und überträgt die Internetseite in Form einer Datennachricht N5 "reply" mittels des verbindungsorientierten Übertragungsprotokolls TCP an das Kommunikationsendgerät KEG. Der Zwischenknoten ZK empfängt diese Datennachricht N5, erkennt das verbindungsorientierte Übertragungsprotokoll TCP, führt eine Protokollumsetzung in das verbindungslose Übertragungsprotokoll UDP durch und sendet die Nachricht "reply" unter Benutzung des verbindungslosen Übertragungsprotokolls UDP als Nachricht N6 an das Kommunikationsendgerät KEG weiter. Daraufhin liegen die angeforderten Daten bei dem Kommunikationsendgerät KEG vor.

Optional kann der Zwischenknoten eine Anpassung der Datenübertragungsrate an den von dem Kommunikationsendgerät versendeten Träger vornehmen, bevor er die Datennachricht N6 mittels des Übertragungsprotokolls UDP zu dem Kommunikationsendgerät KEG überträgt. Dazu speichert der Zwischenknoten ZK die von dem Dienstrechner DR empfangene Datennachricht zwischen (beispielsweise in einem Zwischenspeicher für Internetseiten) und sendet daraufhin die Nachricht N6 mit einer Datenübertragungsrate an das Kommunikationsendgerät KEG weiter, die der von dem Träger übertragbaren Datenrate entspricht. Diese Datenrate wird im allgemeinen z.B. bei einem GSM-Träger geringer sein als bei einem UMTS-Träger. Dadurch kann vorteilhafterweise eine reibungslose Datenübertragung über die erste Kommunikationsverbindung KV1 (Luftschnittstelle) sichergestellt werden und unerwünschte Effekte, wie beispielsweise Überlauf von Datenpuffern, durch eine zu hohe und von dem Mobilfunknetz nicht realisierbare Datenübertragungsrate werden vermieden.

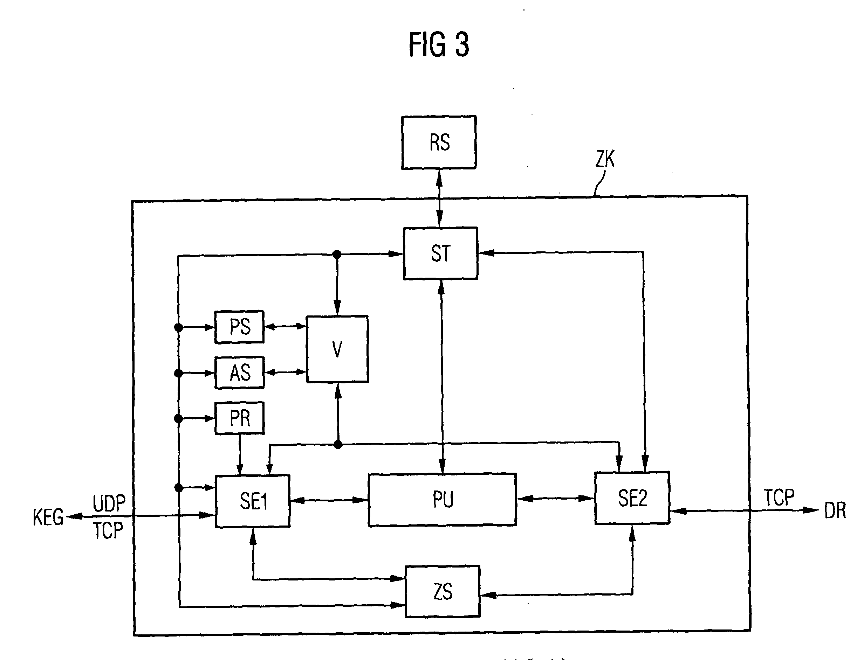

In Figur 3 sind in einem detaillierten Ausführungsbeispiel ausgewählte erfindungswesentliche Elemente des Zwischenknotens ZK dargestellt. Der Zwischenknoten ZK verfügt über eine Sende-Empfangs-Einheit SE1, mittels der er Daten mit dem Kommunikationsendgerät KEG austauschen kann sowohl unter Verwendung des verbindungsorientierten Übertragungsprotokolls TCP als auch unter Verwendung des verbindungslosen Übertragungsprotokolls UDP. Die Sende-Empfangs-Einheit SE1 ist mit einem Protokollumsetzer PU verbunden, welcher in der Lage ist, das Übertragungsprotokoll UDP in das Übertragungsprotokoll TCP umzusetzen und umkehrt. Der Protokollumsetzer PU ist mit einer zweiten Sende-Empfangs-Einheit SE2 verbunden. Diese zweite Sende-Empfangs-Einheit SE2 ist in der Lage, Daten mit dem Dienstrechner DR auszutauschen unter Verwendung des verbindungsorientierten Übertragungsprotokolls TCP. Sämtliche Einheiten des Zwischenknotens ZK werden von einer Steuereinheit ST überwacht und gesteuert. Die Sende- und Empfangseinheit SE1 und die zweite Sende- und Empfangseinheit SE2 sind mit einer analogischen Vergleichereinheit V verbunden. Von den Sende- und Empfangseinheiten werden bei Empfang von Nachrichten bedarfsweise die IP-Adressen der jeweiligen Nachrichtensender aus den empfangenen Nachrichten ausgelesen und zu der Vergleichereinheit V übertragen. Die Vergleichereinheit V vergleicht diese IP-Adressen mit in einem Adressenspeicher AS abgespeicherten IP-Adressen und liest bei Übereinstimmung aus dem Adressenspeicher AS die dort ebenfalls abgespeicherte Information aus, über welchen Träger (Bearer) der jeweilige Nachrichtensender (z. B. das Kommunikationsendgerät KEG) seine Daten zu dem Zwischenknoten ZK überträgt. Auf diese Art und Weise kann der Zwischenknoten ZK also den verwendeten Träger des Nachrichtensenders, beispielsweise des Kommunikationsendgerätes KEG, feststellen. Alternativ oder zusätzlich wird von der Steuereinheit ST aus einem zwischenknotenexternen-Netzelement, z. B. aus einem RADIUS-Server RS, die Information ausgelesen, wie sich der Nachrichtensender beim Netzzugang authentisiert hat. Der RADIUS-Server übermittelt ein entsprechendes RADIUS-Attribut an den Zwischenknoten; mittels dieses Attributes wird die Art des Trägers festgestellt.

Wenn eine Start-Datenanforderungsnachricht N1 die erste Sende/Empfangseinheit SE1 des Zwischenknotens ZK erreicht, so überträgt die Sende/Empfangseinheit SE1 den mit der Start-Datenanforderungsnachricht N1 mitübertragenen HTTP-Parameter "User Agent" an die Vergleichereinheit V. Diese Vergleichereinheit V vergleicht den Parameter User Agent mit in einem Parameterspeicher PS gespeicherten Parametern und kann somit feststellen, ob das Kommunikationsendgerät KEG in der Lage ist, Nachrichten mittels des verbindungslosen Übertragungsprotokolls UDP zu senden und zu empfangen. Sollte dies nicht der Fall sein, so wird aus einem Programmspeicher PR ein Programmmodul ausgelesen, welches dem speziellen Kommunikationsendgerät ein Senden und Empfangen von Nachrichten mittels des Protokolls UDP ermöglicht, und mittels der Sende/Empfangseinheit SE1 wird das Programmmodul an das Kommunikationsendgerät KEG übertragen.

Zum Zwecke einer gegebenenfalls notwendigen Anpassung der Datenrate bei der Übertragung der Datennachricht N6 (vgl. Figur 2) an den ermittelten Träger sind die erste Sende/Empfangseinheit SE1 und die zweite Sende/Empfangseinheit SE2 mit einem Zwischenspeicher ZS verbunden. In diesem Zwischenspeicher kann beispielsweise eine von dem Datenrechner DR empfangene Internetseite oder eine von dem Datenrechner DR heruntergeladene Datei zwischengespeichert werden, wenn dies bei der Anpassung der Datenübertragungsrate notwendig ist.

Die beschriebene Erfindung weist eine Reihe von Vorteilen auf. Die Nutzung eines Zwischenknotens beispielsweise in Form eines Proxys (der Datenverkehr mittels verbindungsorientierten Übertragungsprotokollen auf Datenverkehr mittels verbindungslosen Übertragungsprotokollen und umgekehrt umsetzt, der also beispielsweise Internet-TCP-Datenverkehr auf UDP-Datenverkehr für das mobile Internet und umgekehrt umsetzt) lässt sich der Datendurchsatz für typische Internetbenutzungen (z. B. für den Abruf von Webseiten) deutlich vergrößern, eine Vergrößerung um den Faktor 2 ist vorstellbar. Dies wird dadurch erreicht, dass ein Protokoll verwendet wird, welches ohne komplexe Tests und Bestätigungsnachrichten der übertragenen Daten arbeitet. Da die Zuverlässigkeit der Datenübertragung durch Radio-Link-Protokolle, wie beispielsweise durch Radio-Link-Protocol (RLP) und Radio-Link-Control (RLC), sichergestellt werden kann, ist die Datenübertragung bei dem erfindungsgemäßen Verfahren ausreichend sicher. Solche Radio-Link-Protokolle führen nämlich zu einer sehr hohen Zuverlässigkeit auf den TCP/IP-Schichten. Daher kann z.B. auf eine Auslieferungskontrolle der Datenpakete verzichtet werden.

Derartige Radio-Link-Protokolle können im ISO/OSI-Modell unterhalb des "IP-Layers" angeordnet sein. Vorteilhafterweise können standardisierte verbindungslose Übertragungsprotokolle (wie beispielsweise UDP) verwendet werden, so dass das erfindungsgemäße Verfahren und die erfindungsgemäße Anordnung problemlos auch im netz- oder länderübergreifenden Datenaustausch eingesetzt werden kann. Bei Nutzung der Erfindung können Wartezeiten von Mobilfunknutzern bei Benutzung ihrer Kommunikationsendgeräte deutlich verringert werden, wenn diese beispielsweise am Internet-Datenverkehr teilnehmen. Der Zwischenknoten kann den Typ des Trägers (Bearer) erkennen und feststellen, ob das Kommunikationsendgerät KEG eine entsprechende Datenübertragungssoftware besitzt. Gegebenenfalls überträgt der Zwischenknoten ZK benötigte Software an das Kommunikationsendgerät KEG. Ein solcher Zwischenknoten kann aufgrund seiner Fähigkeiten auch als ein "Intelligenter Proxy-Rechner" bezeichnet werden. Der Zwischenknoten erkennt, wenn das Kommunikationsendgerät das verbindungslose Übertragungsprotokoll unter Benutzung der Software nutzt und führt eine Übertragung des verbindungslosen in das verbindungsorientierte Übertragungsprotokoll durch (Protokollkonvertierung). Bei der Konvertierung von nach dem verbindungsorientierten Übertragungsprotokolle übertragenen Nachrichten des Datenrechners in nach dem verbindungslosen Übertragungsprotokoll übertragene Daten-Nachrichten für das Kommunikationsendgerät führt der Zwischenknoten eine Optimierung der Datenrate entsprechend des erkannten Trägertyps durch und optimiert damit die Ausnutzung des Netzes, beispielsweise des UMTS-Mobilfunknetzes.

## Patentansprüche

1. Verfahren zum paketorientierten Übertragen von Daten in Telekommunikationsnetzen (MFN) zwischen einem Kommunikationsendgerät (KEG) und einem Datenrechner (DR), wobei bei dem verfahren
- die Datenübertragung über einen zwischengeschalteten protokollumsetzenden Zwischenknoten (ZK) vorgenommen wird, der Nachrichten (N3) nach einem verbindungslosen Übertragungsprotokoll in Nachrichten (N4) nach einem verbindungsorientierten Übertragungsprotokoll und umgekehrt umsetzt,
**dadurch gekennzeichnet, dass**
- verfahrenseinleitend eine Start-Datenanforderungsnachricht (N1) von dem Kommunikationsendgerät (KEG) mittels des verbindungsorientierten Übertragungsprotokolls abgesandt wird,
- diese Start-Datenanforderungsnachricht (N1) von dem Zwischenknoten (ZK) empfangen wird,
- von dem Zwischenknoten (ZK) erkannt wird, dass die Start-Datenanforderungsnachricht (N1) mittels des verbindungsorientierten Übertragungsprotokolls übertragen wurde,
- von dem Zwischenknoten (ZK) mittels des verbindungsorientierten Übertragungsprotokolls ein Programmmodul (N2) zu dem Kommunikationsendgerät (KEG) übermittelt wird, welches dem Kommunikationsendgerät ein Senden und Empfangen von Nachrichten mittels des verbindungslosen Übertragungsprotokolls ermöglicht, wobei das Programmmodul (N2) nur dann zu dem Kommunikationsendgerät (KEG) übermittelt wird, wenn durch den Zwischenknoten (ZK) festgestellt wird, dass das Kommunikationsendgerät ein Mobilfunk-Endgerät (KEG) ist, und
- daraufhin von dem Kommunikationsendgerät (KEG) mittels des verbindungslosen Übertragungsprotokolls eine erste Datenanforderungsnachricht (N3) an den Datenrechner (DR) abgesendet wird.

2. Verfahren nach Anspruch 1,
**dadurch gekennzeichnet, dass**
- die erste Datenanforderungsnachricht (N3) von dem Zwischenknoten (ZK) des Telekommunikationsnetzes (TKN) empfangen wird,
- von dem Zwischenknoten (ZK) diese Datenanforderungsnachricht mittels des verbindungsorientierten Übertragungsprotokolls zu dem Datenrechner übertragen (N4) wird,
- eine auf die Datenanforderungsnachricht (N4) hin von dem Datenrechner (DR) erstellte und mittels des verbindungsorientierten Übertragungsprotokolls an das Kommunikationsendgerät (KEG) abgesandte Datennachricht (N5) von dem Zwischenknoten (ZK) empfangen wird, und
- von dem Zwischenknoten diese Datennachricht mittels des verbindungslosen Übertragungsprotokolls zu dem Kommunikationsendgerät übertragen (N6) wird.

3. Verfahren nach Anspruch 1 oder 2,
**dadurch gekennzeichnet, dass**
- das Programmmodul (N2) nur dann zu dem Kommunikationsendgerät übermittelt wird, wenn durch den Zwischenknoten (ZK) festgestellt wird, dass das Programmmodul noch nicht auf dem Kommunikationsendgerät (KEG) installiert ist.

4. Verfahren nach einem der vorhergehenden Ansprüche,
**dadurch gekennzeichnet, dass**
- als verbindungsorientiertes Übertragungsprotokoll ein verbindungsorientiertes Übertragungsprotokoll der Transport-Schicht des ISO/OSI-Kommunikationsmodells verwendet wird.

5. Verfahren nach einem der vorhergehenden Ansprüche,
**dadurch gekennzeichnet, dass**
- als verbindungsorientiertes Übertragungsprotokoll das Transmission Control Protocol verwendet wird.

6. Verfahren nach einem der vorhergehenden Ansprüche,
**dadurch gekennzeichnet, dass**
- als verbindungsloses Übertragungsprotokoll ein verbindungsloses Übertragungsprotokoll der Netzwerk-Schicht des ISO/OSI-Kommunikationsmodells verwendet wird.

7. Verfahren nach einem der vorhergehenden Ansprüche,
**dadurch gekennzeichnet, dass**
- als verbindungsloses Übertragungsprotokoll das User Datagram Protocol verwendet wird.

8. Verfahren nach einem der vorhergehenden Ansprüche,
**dadurch gekennzeichnet, dass**
- als Kommunikationsendgerät ein drahtlos betreibbares Kommunikationsendgerät (KEG) und als Telekommunikationsnetz ein Mobilfunknetz (MFN) verwendet wird.

9. Zwischenknoten (ZK) für ein Telekommunikationsnetz (MFN) zur paketorientierten Übertragung von Daten zwischen einem Datenrechner (DR) und einem Kommunikationsendgerät (KEG), wobei der Zwischenknoten zum Empfangen von seitens des Kommunikationsendgerätes mittels eines verbindungslosen Übertragungsprotokolls übertragenen Nachrichten (N3), zum Weitersenden (N4) dieser Nachrichten an den Datenrechner (DR) mittels eines verbindungsorientierten Übertragungsprotokolls, zum Empfangen von seitens des Datenrechners mittels des verbindungsorientierten Übertragungsprotokolls übertragenen Nachrichten (N5) und zum Weitersenden (N6) dieser Nachrichten an das Kommunikationsendgerät mittels des verbindungslosen Übertragungsprotokolls ausgestaltet ist,
**gekennzeichnet durch**
eine Vergleichereinheit (V), die aus einem Adressenspeicher (AS) ausliest, über welchen Träger das Kommunikationsendgerät (KEG) seine Daten zu dem Zwischenknoten (ZK) überträgt, und **durch** Übertragungsmittel (PR,SE1) des Zwischenknotens, mit denen zu dem Kommunikationsendgerät ein Programmmodul übertragbar ist, welches ein Senden und Empfangen von Nachrichten mittels des verbindungslosen Übertragungsprotokolls ermöglicht.

10. Zwischenknoten nach Anspruch 9,
**gekennzeichnet durch**
Erkennungsmittel (SE1,ST), mit denen erkennbar ist, ob eine eintreffende Nachricht mittels des verbindungslosen Übertragungsprotokolls oder mittels des verbindungsorientierten Übertragungsprotokolls übertragen wird.

11. Zwischenknoten nach Anspruch 9 oder 10,
**gekennzeichnet durch**
Sendemittel (SE1), mit denen eine eintreffende Nachricht (N5) mittels des verbindungslosen Übertragungsprotokolls weitergesendet werden kann.

12. Zwischenknoten nach einem der Ansprüche 9 bis 11,
**gekennzeichnet durch**
Sendemittel (SE2), mit denen eine eintreffende Nachricht (N3) mittels des verbindungsorientierten Übertragungsprotokolls weitergesendet werden kann.

13. Zwischenknoten nach einem der Ansprüche 9 bis 12,
**gekennzeichnet durch**
Feststellungsmittel (SE1,V,PS), mit denen feststellbar ist, ob auf dem Kommunikationsendgerät (KEG) ein Programmmodul installiert ist, welches dem Kommunikationsendgerät ein Senden und Empfangen von Nachrichten mittels des verbindungslosen Übertragungsprotokolls ermöglicht.

14. Telekommunikationsnetz,
**gekennzeichnet durch**
einen Zwischenknoten (ZK) nach einem der Ansprüche 9 bis 13.

## Claims

1. Method for the packet-oriented transmission of data in telecommunications networks (MFN) between a communications terminal (KEG) and a data computer (DR), in which method
- the data is transmitted via an intermediately connected protocol-converting intermediate node (ZK) which converts messages (N3) in a connectionless transmission protocol into messages (N4) in a connection-oriented transmission protocol, and vice versa,
**characterized in that**
- when the method is initiated, a start data request message (N1) is emitted by the communications terminal (KEG) by means of the connection-oriented transmission protocol,
- this start data request message (N1) is received by the intermediate node (ZK),
- the intermediate node (ZK) detects that the start data request message (N1) has been transmitted by means of the connection-oriented transmission protocol,
- a program module (N2) is transferred by the intermediate node (ZK) by means of the connection-oriented transmission protocol to the communications terminal (KEG), which module permits the communications terminal to transmit and receive messages by means of the connectionless transmission protocol, in which the program module (N2) is transferred to the communications terminal (KEG) only if the intermediate node (ZK) detects that the communications terminal is a mobile telephone terminal (KEG), and
- in response, the communications terminal (KEG) transmits a first data request message (N3) to the data computer (DR) by means of the connectionless transmission protocol.

2. Method according to Claim 1,
**characterized in that**
- the first data request message (N3) is received by the intermediate node (ZK) of the telecommunications network (TKN),
- this data request message is transmitted (N4) by the intermediate node (ZK) to the data computer by means of the connection-oriented transmission protocol,
- a data message (N5) which is created by the data computer (DR) in response to the data request message (N4) and is transmitted to the communications terminal (KEG) by means of the connection-oriented transmission protocol is received by the intermediate node (ZK), and
- this data message is transmitted (N6) to the communications terminal by the intermediate node by means of the connectionless transmission protocol.

3. Method according to Claim 1 or 2,
**characterized in that**
- the program module (N2) is transferred to the communications terminal only if the intermediate node (ZK) detects that the program module has not yet been installed on the communications terminal (KEG).

4. Method according to one of the preceding claims,
**characterized in that**
- a connection-oriented transmission protocol of the transport layer of the ISO/OSI communications model is used as the connection-oriented transmission protocol.

5. Method according to one of the preceding claims,
**characterized in that**
- the transmission control protocol is used as the connection-oriented transmission protocol.

6. Method according to one of the preceding claims,
**characterized in that**
- a connectionless transmission protocol of the network layer of the ISO/OSI communications model is used as a connectionless transmission protocol.

7. Method according to one of the preceding claims,
**characterized in that**
- the user datagram protocol is used as the connectionless transmission protocol.

8. Method according to one of the preceding claims,
**characterized in that**
- a communications terminal (KEG) which can be operated in a wire-free fashion is used as the communications terminal, and a mobile telephone network (MFN) is used as the telecommunications network.

9. Intermediate node (ZK) for a telecommunications network (MFN) for the packet-oriented transmission of data between a data computer (DR) and a communications terminal (KEG), in which the intermediate node is designed to receive messages (N3) which are transmitted by the communications terminal by means of a connectionless transmission protocol, to pass (N4) these messages on to the data computer (DR) by means of a connection-oriented transmission protocol, to receive messages (N5) which have been transmitted by the data computer by means of the connection-oriented transmission protocol, and to pass (N6) these messages on to the communications terminal by means of the connectionless transmission protocol,
**characterized by**
a comparator unit (V), which reads out of an address memory (AS) which bearer the communications terminal (KEG) uses to transmit its data to the intermediate node (ZK), and by transmission means (PR, SE1) of the intermediate node with which it is possible to transmit to the communications terminal a program module which permits messages to be transmitted and received by means of the connectionless transmission protocol.

10. Intermediate node according to Claim 9, **characterized by** detector means (SE1, ST) with which it is possible to detect whether an incoming message is transmitted by means of the connectionless transmission protocol or by means of the connection-oriented transmission protocol.

11. Intermediate node according to Claim 9 or 10, **characterized by** transmitter means (SE1) with which an incoming message (N5) can be passed on by means of the connectionless transmission protocol.

12. Intermediate node according to one of Claims 9 to 11, **characterized by** transmitter means (SE2) with which an incoming message (N3) can be passed on by means of the connection-oriented transmission protocol.

13. Intermediate node according to one of Claims 9 to 12, **characterized by** detection means (SE1, V, PS) with which it is possible to detect whether a program module which permits the communications terminal to transmit and receive messages by means of the connectionless transmission protocol is installed on the communications terminal (KEG).

14. Telecommunications network, **characterized by** an intermediate node (ZK), according to one of Claims 9 to 13.

## Revendications

1. Procédé pour la transmission de données orientée paquets dans des réseaux de télécommunication (MFN) entre un terminal de communication (KEG) et un ordinateur de données (DR), procédé dans lequel :
la transmission de données est effectuée par l'intermédiaire d'un noeud intermédiaire (ZK) intercalé, convertisseur de protocole, qui convertit des messages (N3) selon un protocole de transmission sans connexion en messages (N4) selon un protocole de transmission orienté connexion et inversement,
**caractérisé par le fait que**
- en introduction au procédé, un message de demande de données initial (N1) est envoyé par le terminal de communication (KEG) au moyen du protocole de transmission orienté connexion,
- ce message de demande de données initial (N1) est reçu par le noeud intermédiaire (ZK),
- le noeud intermédiaire (ZK) reconnaît que le message de demande de données initial (N1) a été transmis au moyen du protocole de transmission orienté connexion,
- au moyen du protocole de transmission orienté connexion, le noeud intermédiaire (ZK) transmet au terminal de communication (KEG) un module de programme (N2) qui permet au terminal de communication d'émettre et de recevoir des messages au moyen du protocole de transmission sans connexion, le module de programme (N2) n'étant transmis au terminal de communication (KEG) que si le noeud intermédiaire (ZK) a constaté que le terminal de communication est un terminal de radiocommunication mobile (KEG), et
- ensuite, le terminal de communication (KEG) envoie un premier message de demande de données (N3) à l'ordinateur de données (DR) au moyen du protocole de transmission sans connexion.

2. Procédé selon la revendication 1,
**caractérisé par le fait que**
- le premier message de demande de données (N3) est reçu par le noeud intermédiaire (ZK) du réseau de télécommunication (TKN),
- le noeud intermédiaire (ZK) transmet (N4) ce message de demande de données à l'ordinateur de données au moyen du protocole de transmission orienté connexion,
- un message de données (N5) élaboré suite au message de demande de données (N4) par l'ordinateur de données (DR) et envoyé au terminal de communication (KEG) au moyen du protocole de transmission orienté connexion est reçu par le noeud intermédiaire (ZK), et
- le noeud intermédiaire transmet (N6) ce message de données au terminal de communication au moyen du protocole de transmission sans connexion.

3. Procédé selon la revendication 1 ou 2,
**caractérisé par le fait que**
- le module de programme (N2) n'est transmis au terminal de communication que si le noeud intermédiaire (ZK) constate que le module de programme n'est pas encore installé sur le terminal de communication (KEG).

4. Procédé selon l'une des revendications précédentes,
**caractérisé par le fait que**
- on utilise comme protocole de transmission orienté connexion un protocole de transmission orienté connexion de la couche transport du modèle de communication ISO / OSI.

5. Procédé selon l'une des revendications précédentes,
**caractérisé par le fait que**
- on utilise comme protocole de transmission orienté connexion le Transmission Control Protocol.

6. Procédé selon l'une des revendications précédentes,
**caractérisé par le fait que**
- on utilise comme protocole de transmission sans connexion un protocole de transmission sans connexion de la couche réseau du modèle de communication ISO / OSI.

7. Procédé selon l'une des revendications précédentes,
**caractérisé par le fait que**
- on utilise comme protocole de transmission sans connexion le User Datagram Protocol.

8. Procédé selon l'une des revendications précédentes,
**caractérisé par le fait que**
- on utilise comme terminal de communication un terminal de communication (KEG) pouvant fonctionner sans fil et comme réseau de télécommunication un réseau de radiocommunication mobile (MFN).

9. Noeud intermédiaire (ZK) pour un réseau de télécommunication (MFN) en vue de la transmission de données orientée paquets entre un ordinateur de données (DR) et un terminal de communication (KEG), le noeud intermédiaire étant conçu pour la réception de messages (N3) transmis par le terminal de communication au moyen d'un protocole de transmission sans connexion, pour la retransmission (N4) de ces messages à l'ordinateur de données (DR) au moyen d'un protocole de transmission orienté connexion, pour la réception de messages (N5) transmis par l'ordinateur de données au moyen du protocole de transmission orienté connexion et pour la retransmission (N6) de ces messages au terminal de communication au moyen du protocole de transmission sans connexion,
**caractérisé par** une unité de comparaison (V) qui lit dans une mémoire d'adresses (AS) sur quel support le terminal de communication (KEG) transmet ses données au noeud intermédiaire (ZK) et par des moyens de transmission (PR, SE1) avec lesquels un module de programme qui permet d'émettre et de recevoir des messages au moyen du protocole de transmission sans connexion peut être transmis au terminal de communication.

10. Noeud intermédiaire selon la revendication 9,
**caractérisé par** des moyens de reconnaissance (SE1, ST) avec lesquels on peut reconnaître si un message entrant est transmis au moyen du protocole de transmission sans connexion ou au moyen du protocole de transmission orienté connexion.

11. Noeud intermédiaire selon la revendication 9 ou 10,
**caractérisé par** des moyens d'émission (SE1) avec lesquels un message entrant (N5) peut être retransmis au moyen du protocole de transmission sans connexion.

12. Noeud intermédiaire selon l'une des revendications 9 à 11,
**caractérisé par** des moyens d'émission (SE2) avec lesquels un message entrant (N3) peut être retransmis au moyen du protocole de transmission orienté connexion.

13. Noeud intermédiaire selon l'une des revendications 9 à 12,
**caractérisé par** des moyens de constatation (SE1, V, PS) avec lesquels on peut constater si un module de programme qui permet au terminal de communication d'émettre et de recevoir des messages au moyen du protocole de transmission sans connexion est installé sur le terminal de communication (KEG).

14. Réseau de télécommunication,
**caractérisé par** un noeud intermédiaire (ZK) selon l'une des revendications 9 à 13.
